(19) Europäisches Patentamt / European Patent Office / Office européen des brevets

(11) EP 2 863 396 A1

(12) EUROPEAN PATENT APPLICATION

(43) Date of publication:
22.04.2015 Bulletin 2015/17

(51) Int Cl.:
H01B 3/44 (2006.01)        C08K 5/00 (2006.01)
C08K 5/3437 (2006.01)      C08L 23/16 (2006.01)

(21) Application number: 14306609.0

(22) Date of filing: 13.10.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 14.10.2013   KR 20130122173

(71) Applicant: Nexans
75008 Paris (FR)

(72) Inventors:
• Kim, Seong-Jin
361-871 Chungcheongbuk-do (KR)
• Kim, Kwon-Soon
361-830 Chungcheongbuk-do (KR)
• Bae, Ji-Hyun
700-082 Daegu (KR)

(74) Representative: Peguet, Wilfried et al
Ipsilon Feray Lenne Conseil
Le Centralis
63, avenue du Général Leclerc
92340 Bourg-la-Reine (FR)

(54) **Polymer resin composition for preparing insulating material having reinforced thermal stability**

(57) The present invention relates to a polymer resin composition comprising EPDM (Ethylene Propylene Diene Monomer) as a base resin, and further comprising the following components based on 100 parts by weight of the base resin:
- 1 to 5 parts by weight of amine-based antioxidant, and
- 1 to 5 parts by weight of HALS (Hindered Amine Light Stabilizer).

An insulating material manufactured using the polymer resin composition according to the present invention has a good thermal stability and also an extended lifespan under high temperatures. Thus, it is particularly suitable for use in cables for nuclear power plants.

Fig.1

**Description**

**Field of the invention**

The present invention relates to a polymer resin composition for manufacturing an insulating material with reinforced thermal stability. Also, the present invention relates to an insulating material manufactured using the polymer resin composition, particularly an insulating material for cables used in nuclear power plants.

**Background of the invention**

A cable used in nuclear power plants is generally composed of a conductor, an insulation, a shield and a jacket. The insulation plays a role in preventing the electric current flowing in the conductor from flowing out of the conductor, and maintaining the voltage. The mechanical properties of the cable vary according to the additives comprised in the insulation.

In particular, cables used in nuclear power plants are characterized in that it is difficult to change them while the nuclear power plants are operating and they are continuously exposed to harsh environments with very high temperatures. Accordingly, it is general that aging of the insulations or the sheaths in said cables is accelerated. When an electric fire due to deterioration occurs, such aged cables lose their own functions and cause false operations. In this case, the safety shutdown function of the nuclear power plants is not normally carried out, and thus a serious safety accident may occur.

Therefore, there are a lot of efforts in the related field in order to improve the heat resistance and/or the radiation resistance of cables used in nuclear power plants.

For an example, the Korean patent publication KR 10-2011-0070162 A1 discloses that high-temperature durability of a cable is improved by placing an additional subsidiary material having an activation energy of 1.40~1.60eV between the core and the sheath of the cable, and that the additional subsidiary material is preferably treated with a phenolic antioxidant. However, in said published patent application, an eco-friendly material HF-PO (Halogen Free Poly Olefin) treated with a phenolic antioxidant was used in order to obtain an additional subsidiary material having an activation energy of 1.40~1.60eV.

For another example, the Korean patent KR 10-1216050 B1 discloses that mechanical properties, such as elongation and tensile strength, and radiation resistance of a cable is improved by comprising an EPDM, a carbon black, a cross-linker, an antioxidant and a clay reinforcing material in the weight ratio of 100:40:1:0.5:10. However, in said patent, an EPDM, a carbon black, a cross-linker, an antioxidant and a clay reinforcing material should be comprised as essential elements.

Surprisingly, the present inventors found that the thermal stability of a cable insulation manufactured from a polymer resin composition, and thus the lifespan of the cable, in particular the lifespan of the cable when continuously exposed to high temperatures vary depending on the type and the mixing ratio of antioxidants comprised in the polymer resin composition. Until now, there have not been detailed studies about the fact that the thermal stability of cable insulation can be significantly improved by a certain combination of antioxidants and UV stabilizers comprised in a polymer resin composition.

**Detailed description of the invention**

Insulating materials for cables typically used in nuclear power plants in the art were manufactured to match 40 years of design life. The purpose of the present invention is to significantly improve the thermal stability of insulating materials for cable and provide insulating materials for cables matching 60 years of design life.

Said purpose of the present invention can be achieved by a polymer resin composition comprising 1 to 5 parts by weight of amine-based antioxidant and 1 to 5 parts by weight of HALS based on 100 parts by weight of EPDM, which is used as the base resin.

EPDM, which is used as the base resin of the polymer resin composition according to the present invention, is the acronym of ethylene propylene diene monomer. The present inventors found that the thermal stability of the polymer resin material manufactured from the polymer resin composition varies when the composition of EPDM changes. In order to more enhance the thermal stability of the polymer resin material, it is preferable that the content of ENB (ethylidene norbornene) comprised in said EPDM is from 2 to 5 % by weight, particularly from 4 to 5 % by weight. In addition, it is preferable that the content of ethylene comprised in said EPDM is 50 or more % by weight, particularly 60 or more % by weight, more particularly 70 or more % by weight.

Unlike the fact that phenolic, phosphite or thioesteric antioxidants were traditionally used to give EPDM-based insulating materials a heat resistance, the polymer resin composition according to the present invention uses a combination of an amine-based antioxidant and a HALS to improve the thermal stability of EPDM-based insulating materials.

Said amine-based antioxidant includes, but not limited to, TMQ (2,2,4-trimethyl-1,2-dihydroquinoline), etc.

HALS, which is used in a combination with said amine-based antioxidant, is the acronym for Hindered Amine Light Stabilizer. It is a derivative of a 2,2,6,6-tetramethylpiperidine, and known in the art as a very effective stabilizer for photo-induced decompositions of most polymers. In addition, HALS is characterized in that it is regenerated in the stabilization process, and thus it can present a good thermal stability and light stability for a long time. Such HALS includes N-H type, N-R type, NOR type, etc., and it is commercially available in various trade names. In the present invention, it is preferable to use HALS of N-H type or N-R type, for example HALS having NH group(s) or $NCH_3$ group(s) is used.

According to one preferable embodiment, said polymer resin composition further comprises 30 to 50 parts by weight of halogen-based flame retardant, 5 to 10 parts by weight of antimony-based flame retardant aid, and 5 to 15 parts by weight of at least one stabilizer selected from the group consisting of lead-based compounds, metal soap-based compounds and calcium-based compounds, based on 100 parts by weight of the base resin.

Said halogen-based flame retardant includes, but not limited to, bromine-based flame retardant such as TBBA (Tetrabromobisphenol-A), chlorine-based flame retardant such as TCPP (Tris(1-chloro-2-propyl)phosphate, etc.

Said antimony-based flame retardant aid includes, but not limited to, antimony trioxide, etc.

Said stabilizer is selected from the group consisting of lead-based, metal soap-based and calcium-based compounds. Examples of said lead-based stabilizer include PbO, TLS (Tribasic Lead Sulfate), DLS (Dibasic Lead Stearate), DLP (Dibasic Lead Phosphite), etc., examples of said metal soap-based stabilizer include Ba-St(sterate), Ca-St, Zn-St, etc., and examples of said calcium-based stabilizer include Ca-Zn-Mg, Ca-Zn-Al, etc., but they are not limited.

In a particular embodiment according to the present invention, the polymer resin composition is a cross-linkable composition.

The cross-linkable composition can be cross-linked by well-known technics in the art.

In this respect, the polymer resin composition can include at least one cross-linker, in a sufficient amount to crosslink the polymer resin composition.

By way of example, the amount of cross-linker can be from 0.1 to 10 parts by weight based on 100 parts by weight of the base resin.

The cross-linker can be an organic peroxide, such as dicumyle peroxide (DCP).

Another aspect of the present invention relates to an electric cable comprising at least one insulated conductor, said insulated conductor comprising at least one elongated electric element surrounded by at least one insulating layer, said insulating layer being made from the polymer resin composition according to the invention.

The electric cable can further comprise an outer sheath surrounding all together the insulated conductor(s).

The outer sheath is a protecting sheath, to mechanically protect the insulated conductor(s) of the electric cable. Said outer sheath can also have flame retardant properties. More particularly, the outer sheath can be made from flame retardant polymer and/or polymer with flame retardant filler.

By way of example, the outer sheath can be a sheath made from chlorosulfonated polyethylene, which provides good mechanical protection as well as good flame retardant properties.

The elongated electric element can be a single core conductor such as an electrical wire, or a multicore conductor such as a plurality of wires.

The elongated electric element can be made from a metallic material such as one selected among aluminum, aluminum alloy, copper, copper alloy, and any combination thereof. In a preferred embodiment, the electric cable can comprise at least two insulated conductor according to the present invention.

The insulating layer according to the invention can be a layer physically in direct contact with the elongated electric element or, an intermediate layer, or the outermost layer of the cable.

In a particular embodiment, a separator layer is positioned along the cable between the elongated electric element and the insulating layer. More particularly, the separator layer is physically in direct contact with the elongated electric element.

The separator layer advantageously allows to easily separate the insulating layer from the elongated electric element.

More preferably, the separator is a tape helicoidally surrounding the elongated electric element. For example, the separator layer can be a polyester tape.

The insulating layer of the present invention is more particularly an electrically insulating layer.

The insulating layer of the invention can be advantageously a cross-linked layer.

In a particular embodiment, the present invention relates to a polymer resin material prepared using above-mentioned polymer resin composition, in particular a covering material or an insulation of cable or electric wire, more particularly used in nuclear power plants.

**Advantageous Effects**

An insulating material manufactured using the polymer resin composition according to the present invention, of which the mixing proportion and the type of the antioxidants are specified, has a good tensile strength and elongation at a room temperature. Moreover, it has a high tensile retention and elongation retention even at a high temperature over 100 °C, and thus shows a significantly good heat resistance. In addition, physical and chemical properties basically required for cables such as flame retardancy are also excellent. Thus, cables or electric wires covered with insulating materials according to the present invention have remarkably increased life spans even in harsh environments of high temperature such as nuclear power plants, and thus are economically efficient.

**Examples**

The present invention is described in further detail in the following Examples and from the accompanying drawing, which are not in any way intended to limit the scope of the invention as claimed. In addition, it will appear to those ordinarily skilled in the art that various modifications may be made to the disclosed embodiments, and that such modifications are intended to be within the scope of the present invention.

**1. Preparation of specimens**

Using compositions having components and amounts (presented in parts by weight based on 100 parts of the base resin) listed in the below Table 1, a cross-linked insulation of cable was prepared with a factory extruder and usual crosslinking conditions when using an organic peroxide. The polymer resin compositions of Examples 1 to 4 are according to the present invention, and the polymer resin compositions of Comparative Examples 1 to 3 are out of the scope of the present invention. Specimens were collected from each of the cable prepared as described above.

[Table 1]

|  | Examples | | | | Comparative Examples | | |
|---|---|---|---|---|---|---|---|
|  | 1 | 2 | 3 | 4 | 1 | 2 | 3 |
| ethylene propylene diene monomer (EPDM) [1] | 100 | 100 | 100 | 100 | 100 | - | - |
| ethylene propylene diene monomer (EPDM) [2] | - | - | - | - | - | 100 | - |
| ethylene propylene diene monomer (EPDM) [3] | - | - | - | - | - | - | 100 |
| ethylene bistetrabromo phthalimide | 50 | 50 | 30 | 40 | 50 | 50 | 50 |
| antimony trioxide | 10 | 10 | 10 | 5 | 10 | 10 | 10 |
| Talc | 50 | 50 | 50 | 50 | 50 | 50 | 50 |
| PbO (lead oxide) | 10 | 10 | 10 | 5 | 10 | 10 | 10 |
| 2,2,4-trimethyl-1,2-dihydroquinoline (TMQ) [4] (molecular weight: 874) | - | - | - | - | 3 | - | - |
| 2,2,4-trimethyl-1,2-dihydroquinoline (TMQ) [5] (molecular weight: 173) | 2 | 1.5 | 2 | 2 | - | - | - |
| zinc 2-mercaptotolumidazol e (ZMTI) | - | - | - | - | 2 | 3 | 3 |
| N-H polymeric HALS [6] | 3 | 2.5 | 3 | 3 | - | - | - |
| 3-(3,5-di-tert-butyl-4-hydroxyphenyl)propi onate | - | - | - | - | - | 2 | 2 |
| stearic acid | 0.5 | 0.5 | 0.5 | 0.5 | 0.5 | 0.5 | 0.5 |

(continued)

|  | Examples | | | | Comparative Examples | | |
|---|---|---|---|---|---|---|---|
|  | 1 | 2 | 3 | 4 | 1 | 2 | 3 |
| DCP (Di-cumyl peroxide) | 4 | 4 | 4 | 4 | 4 | 4 | 4 |
| [1]: EPDM, of which the content of ENB is from 4 to 5 % by weight, and the content of ethylene is from 60 to 70 % by weight. Said EPDM is commercialized by DuPont Dow Elastomers L.L.C with the CAS number 25038-36-2. [2]: EPDM, of which the content of ENB is from 3 to 4 % by weight, and the content of ethylene is from 60 to 70 % by weight. Said EPDM is commercialized by Lanxess with the CAS number 61789-00-2. [3]: EPDM, of which the content of ENB is from 2 to 3 % by weight, and the content of ethylene is 50 % by weight. Said EPDM is commercialized by Mitsui Chemicals Inc with the CAS number 25038-36-2. [4] : TMQ with molecular weight of 874 is commercialized by Addivant with the CAS number 26780-96-1. [5] : TMQ with molecular weight 173 is commercialized by Lanxess with the CAS number 26780-96-1. [6]: N-H polymeric HALS is commercialized by BASF with the CAS number 71878-19-8. | | | | | | | |

In the Table 1 above, talc commercially available in the trade name of PG-600 was used as a filler, stearic acid was used as a processing aid, and DCP was used as a cross-linker. In addition, TMQ was used as an amine-based antioxidant. TMQs with different molecular weights only differ in their degrees of polymerization, but their heat-resistant properties are indifferent.

### 2. General Test Evaluation

It was tested if the collected specimens satisfy the standards below.

### (1) Room Temperature Properties Standard

When measured with a tension speed of 250mm/min according to IEC 60811-1-1, the tensile strength should be 8.2MPa or higher, and the elongation should be 150% or higher.

### (2) Heating Properties Standard

After leaving the specimens at 121 °C for 168 hours, the change rates of tensile strength and elongation for the specimens were measured. Comparison of the change rates are based on the tensile strength and elongation at a room temperature, and each of the retentions should be 75% or higher.

### (3) Hot-Set Properties Standard

When the specimens were left in an oven of 150°C for 10 minutes with a pendulum of weight of $20.4g/mm^2$ hung on each them, the extended lengths of the specimens (i.e., elongation in load state) should be 50% or less.
Then, after removing the pendulums from the specimens, leaving them in an oven of 150°C for 5 minutes, and then cooling them at a room temperature, the shortened lengths of the specimens (i.e., maximum elongation after cooling) should be 5% or less.

### (4) Flame Retardance Standard

The specimens were tested according to IEC 60332-2 Cat.A flame retardancy test standards. When the flame retardancies of materials are measured according to ASTM D 2863, the oxygen index should be 30% or higher.

[Table 2]

| Results of General Test Evaluation | | | | | | | | |
|---|---|---|---|---|---|---|---|---|
| | | Examples | | | | Comparative Examples | | |
| | | 1 | 2 | 3 | 4 | 1 | 2 | 3 |
| Room temperature | Tensile strength (MPa) | 11.5 | 11 | 10 | 10 | 9.5 | 8.0 | 4.1 |
| | Elongation (%) | 380 | 390 | 350 | 355 | 358 | 320 | 195 |
| Heating | Tensile retention (%) | 91 | 85 | 92 | 92 | 65 | 52 | 55 |
| | Elongation retention (%) | 98 | 87 | 97 | 95 | 71 | 66 | 61 |
| Hot-set | Elongation in load state (%) | 0 | 5 | 0 | 0 | 0 | 0 | 0 |
| | Maximum elongation after cooling (%) | 0 | 0 | 0 | 0 | -2 | 0 | 0 |
| Flame retardancy | Oxygen Index (%) | 34 | 34 | 31 | 31 | 32 | 34 | 33 |
| Standard Compatibility | | Pass | Pass | Pass | Pass | Fail | Fail | Fail |

The Table 2 above shows the test values obtained for specimens manufactured using compositions of Examples 1 to 4 and Comparative Examples 1 to 3.

The specimens according to Examples 1 to 4 satisfied all the evaluation standards for the tensile strength and the elongation at a room temperature, as well as the tensile retention and the elongation retention after heating at 121 °C. In addition, said specimens also satisfied the hot-set properties standards and the flame retardancy standards.

Meanwhile, the specimens according to Comparative Examples 2 and 3 presented the tensile strength lower than 8.2MPa when measured at a room temperature, and thus dissatisfied the evaluation standards. In addition, all the specimens according to Comparative Examples 1 to 3 presented the tensile retention and elongation retention values lower than 75%, and thus dissatisfied the evaluation standards.

## 3. Long-Term Ageing Test Evaluation

This test is to anticipate the heat-resistance-related life spans of insulating materials according to IEC 60216. The specimens were accelerated-aged to the end point at the three specific temperatures selected from the range of 150~120°C. Said end point was set in 50% elongation. The activation energy and the life span of the specimens were anticipated by applying Arrehenius equation with the data obtained from the accelerated aging test, i.e. the end point (the time in 50% elongation) and the temperature.

The below Formula 1 is Arrehenius model, and is a basis for determining the activation energy and the life span of material. In addition, the below Formula 2 represents the relationship between accelerated aging temperature and accelerated aging time when the activation energy is predetermined, and allows it to anticipate the life span of material at continuous duty temperature.

[Formula 1]

$$\frac{d\phi}{dt} = A * Exp\left(\frac{-E}{RT}\right)$$

[Formula 2]

$$t_1 = t_2 * Exp\left[\left(\frac{E}{R}\right) * \left(\frac{1}{T_1} - \frac{1}{T_2}\right)\right]$$

wherein,

$t_1$ = life span of material (hour);
$T_1$ = continuous duty temperature (absolute temperature, K);
$t_2$ = accelerated aging time (hour);
$T_2$ = accelerated aging temperature (absolute temperature, K) ;
E = activation energy (eV);
R = Boltzmann constant, 8.617x10$^{-5}$ (eV/K).

[Table 3]

| Results of Long-Term Ageing Test Evaluation | | |
|---|---|---|
| | Specimen manufactured from the composition according to Example 1 | Specimen manufactured from the composition according to Comparative Example 1 |
| Base resin | EPDM | EPDM |
| Antioxidant | TMQ-based antioxidant + polymeric HALS | TMQ-based antioxidant + mercaptotolumidazole-based antioxidant |
| Anticipated life span at the continuous duty temperature 90 °C | about 60 years | about 40 years |

According to the results of accelerated aging test performed for a conventional insulating material generally used in nuclear power plants (i.e., one derived from a composition using a combination of TMQ and mercaptotolumidazole as an antioxidant), about 40 years of life span was provided when the continuous duty temperature was 90 °C.

Meanwhile, according to the results of accelerated aging test performed for the insulating materials according to the present invention, about 60 years of life span was provided when the continuous duty temperature was 90°C.

**4. Figure**

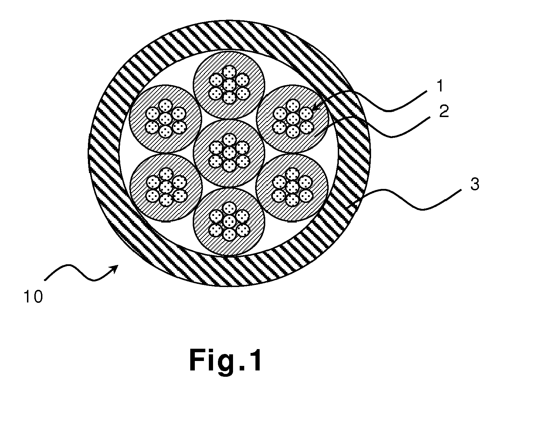

Figure 1 represents a particular embodiment of the cross section of an example of an electric cable according to the invention.

The electric cable 10 as represented on figure 1 comprises seven insulated electrical conductors including respectively one multicore conductor 1 of a plurality of tin coated copper wire, surrounded by an insulated and cross-linked layer 2, said insulated layer 2 being obtained from the polymer resin composition according to the present invention.

A separator layer (not represented on figure 1) can be optionally positioned between the multicore conductor 1 and the insulated layer 2, said separator being a polyester tape helicoidally surrounding the multicore conductor along the cable.

These seven insulated electrical conductors are surrounded by a protecting sheath 3 made from chlorosulfonated polyethylene.

**Claims**

1. A polymer resin composition comprising EPDM (Ethylene Propylene Diene Monomer) as a base resin, wherein the composition comprises the following components based on 100 parts by weight of the base resin:

    - 1 to 5 parts by weight of amine-based antioxidant, and
    - 1 to 5 parts by weight of HALS (Hindered Amine Light Stabilizer).

2. The polymer resin composition according to claim 1, wherein the EPDM has 2 to 5 % by weight of ENB (Ethylidene Norbornene) and 50 or more % by weight of ethylene.

3. The polymer resin composition according to claim 2, wherein the EPDM has 4 to 5 % by weight of ENB (Ethylidene Norbornene) and 60 or more % by weight of ethylene.

4. The polymer resin composition according to claim 1, wherein the amine-based antioxidant is 2,2,4-trimethyl-1,2-dihydroquinoline.

5. The polymer resin composition according to claim 1, wherein the HALS has NH or NCH$_3$ group.

6. The polymer resin composition according to claim 1, wherein the composition further comprises the following components based on 100 parts by weight of the base resin:

- 30 to 50 parts by weight of halogen-based flame retardant,
- 5 to 10 parts by weight of antimony-based flame retardant aid, and
- 5 to 15 parts by weight of at least one stabilizer selected from the group consisting of lead-based compounds, metal soap-based compounds and calcium-based compounds.

7. The polymer resin composition according to claim 1, wherein the polymer resin composition comprises at least one cross-linker.

8. Electric cable comprising at least one insulated conductor, said insulated conductor comprising at least one elongated electric element surrounded by at least one insulating layer, wherein said insulating layer is made from the polymer resin composition according to any one of claims 1 to 7.

9. Electric cable according to claim 8, wherein said insulated layer is a cross-linked layer.

10. Electric cable according to claim 8 or 9, wherein the electric cable further comprises an outer sheath surrounding all together the insulated conductor(s).

11. Electric cable according to any one of claims 8 to 10, wherein the electric cable comprises at least two insulated conductors.

**Fig.1**

## EUROPEAN SEARCH REPORT

Application Number

EP 14 30 6609

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2010/022683 A1 (EASTER MARK [US])<br>28 January 2010 (2010-01-28)<br>* abstract *<br>*Comparative examples C-F*;<br>paragraph [0057] - paragraph [0070]; table 1<br>----- | 1,4,5,<br>7-11<br>2,3,6 | INV.<br>H01B3/44<br>C08K5/00<br>C08K5/3437<br>C08L23/16 |
| X<br>Y | AU 2011 226 808 A1 (GEN CABLE TECHNOLOGIES CORP) 13 October 2011 (2011-10-13)<br>* paragraph [0027] *<br>* paragraph [0051] - paragraph [0060]; example 6; table 1 *<br>----- | 1,4,5,<br>7-10<br>2,3,6,11 | |
| X<br>Y | US 2007/100032 A1 (EASTER MARK R [US])<br>3 May 2007 (2007-05-03)<br>* paragraph [0041] - paragraph [0046] *<br>* paragraph [0052] - paragraph [0054] *<br>* paragraph [0058] - paragraph [0090]; example 14; table 3 *<br>----- | 1,4,5,<br>7-10<br>2,3,6,11 | |
| Y<br><br>A | US 4 373 048 A (SCHUBERT PAUL C ET AL)<br>8 February 1983 (1983-02-08)<br>* abstract *<br>* column 3, line 55 - line 59 *<br>* column 7, line 55 - column 8, line 15; claim 18 *<br>* column 10, line 15 - column 11, line 63; examples 1, 2 *<br>----- | 6<br><br>1-5,7-11 | TECHNICAL FIELDS SEARCHED (IPC)<br>H01B<br>C08K<br>C08L |

-/--

The present search report has been drawn up for all claims

| Place of search | Date of completion of the search | Examiner |
|---|---|---|
| Munich | 9 March 2015 | Meiser, Wibke |

EPO FORM 1503 03.82 (P04C01)

Europäisches Patentamt
European Patent Office
Office européen des brevets

## EUROPEAN SEARCH REPORT

**Application Number**

EP 14 30 6609

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ÖZDEMIR ET AL: "Gamma irradiation degradation/modification of 5-ethylidene 2-norbornene (ENB)-based ethylene propylene diene rubber (EPDM) depending on ENB content of EPDM and type/content of peroxides used in vulcanization", RADIATION PHYSICS AND CHEMISTRY, PERGAMON, AMSTERDAM, NL, vol. 77, no. 6, 1 June 2008 (2008-06-01), pages 787-793, XP022606203, ISSN: 0969-806X, DOI: 10.1016/J.RADPHYSCHEM.2007.12.010 [retrieved on 2007-12-23] | 2,3 | |
| A | * abstract * <br> * table 1 * <br> *3.1.3. Effect of ENB content* <br> *4. Conclusions* <br> ----- | 1,4-11 | |

TECHNICAL FIELDS SEARCHED (IPC)

The present search report has been drawn up for all claims

| Place of search | Date of completion of the search | Examiner |
|---|---|---|
| Munich | 9 March 2015 | Meiser, Wibke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 14 30 6609

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2015

| Patent document cited in search report | | Publication date | Patent family member(s) | | | Publication date |
|---|---|---|---|---|---|---|
| US 2010022683 | A1 | 28-01-2010 | EP | 2311049 | A2 | 20-04-2011 |
| | | | ES | 2523723 | T3 | 01-12-2014 |
| | | | US | 2010022683 | A1 | 28-01-2010 |
| | | | WO | 2010011418 | A2 | 28-01-2010 |
| AU 2011226808 | A1 | 13-10-2011 | AU | 2011226808 | A1 | 13-10-2011 |
| | | | AU | 2014204538 | A1 | 07-08-2014 |
| US 2007100032 | A1 | 03-05-2007 | AU | 2006306188 | A1 | 03-05-2007 |
| | | | CA | 2627034 | A1 | 03-05-2007 |
| | | | CA | 2841207 | A1 | 03-05-2007 |
| | | | CN | 101346423 | A | 14-01-2009 |
| | | | CR | 9934 | A | 22-07-2008 |
| | | | EP | 1948728 | A2 | 30-07-2008 |
| | | | EP | 2410010 | A1 | 25-01-2012 |
| | | | IL | 191091 | A | 30-08-2012 |
| | | | IL | 218236 | A | 30-09-2013 |
| | | | IL | 218237 | A | 30-09-2013 |
| | | | NZ | 568401 | A | 25-06-2010 |
| | | | NZ | 585714 | A | 25-02-2011 |
| | | | US | 2007100032 | A1 | 03-05-2007 |
| | | | US | 2007213433 | A1 | 13-09-2007 |
| | | | WO | 2007050688 | A2 | 03-05-2007 |
| US 4373048 | A | 08-02-1983 | NONE | | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110070162 A1

- KR 101216050 B1